# EUROPÄISCHE PATENTANMELDUNG

(11) **EP 4 768 236 A1**
(43) Veröffentlichungstag der Anmeldung: **01.07.2026**
(21) Anmeldenummer: 25225021.2
(22) Anmeldetag: 18.12.2025
(51) Int. Cl.: B29D 30/68, B29D 30/54, B26D 3/00, B26D 5/02, B26D 5/04, B26D 5/08, B26D 7/01, B26D 7/02, B29D 30/24

(54) **SPANNSYSTEM FÜR EINEN REIFEN**

(30) Priorität: 24.12.2024 EP 24223142
(71) Anmelder: Bear-Machines GmbH, 48619 Heek (DE)
(72) Erfinder: Berendsen, Mark, 48683 Ahaus-Wessum (DE)
(74) Vertreter: Beckord & Niedlich Patentanwälte PartG mbB

(57) **Zusammenfassung**

Es wird ein Spannsystem (80) für ein Reifenelement beschrieben, insbesondere für einen Reifen, mit einer Trommel (90) mit mehreren Trommelsegmenten (91) zur Aufnahme des Reifenelements und einem Spannkonus (81), auf dem die Trommelsegmente (91) bewegbar gelagert sind. Das Spannsystem (80) umfasst einen Pneumatikantrieb (86), um den Spannkonus (81) in seiner Längsrichtung (LR') zu bewegen. Der Spannkonus (81) weist einen ersten Kolbenabschnitt (82) für eine Bewegung des Spannkonus (81) in eine erste Richtung (R') und einen zweiten Kolbenabschnitt (84) für eine Bewegung des Spannkonus (81) in eine entgegengesetzte, zweite Richtung (R") auf. Der erste Kolbenabschnitt (82) und der zweite Kolbenabschnitt (84) sind an derselben Seite (S1) des Spannkonus (81) angeordnet. Weiterhin wird ein Verfahren zum Aufspannen eines Reifenelements auf eine Trommel (90) eines Spannsystems (80) beschrieben und ein Reifenbearbeitungsgerät mit einer Reifenbearbeitungseinheit und mit einem Spannsystem (80).

## Beschreibung

Die Erfindung betrifft ein Spannsystem für ein Reifenelement mit einer Trommel mit mehreren Trommelsegmenten zur Aufnahme des Reifenelements und ein Verfahren zum Aufspannen eines Reifenelements auf eine solche Trommel sowie ein Reifenbearbeitungsgerät mit einem solchen Spannsystem.

Ein Profil in einer Lauffläche eines neuen Reifens, z.B. eines Fahrzeugreifens, kann aus Stabilitätsgründen nicht beliebig tief ausgebildet werden. Um die Nutzung eines Reifens zu verlängern, gibt es Schneidpistolen, die von Hand geführt werden und ein Messer zum manuellen Nachschneiden des Profils in der Lauffläche des Reifens haben. Hinter dieser Idee steckte der Gedanke, dass Reifen nach Erreichen einer Minimalprofiltiefe nicht direkt entsorgt werden müssen. Weiterhin sind auch Vorrichtungen bekannt, die ein maschinelles Nachschneiden eines Reifenprofils ermöglichen, wobei der betreffende Reifen üblicherweise von einem Fahrzeug demontiert nachgeschnitten wird. Um einen Reifen entlang seiner gesamten Lauffläche bearbeiten zu können, vorzugsweise in einem kontinuierlichen Prozess, muss der Reifen während der Bearbeitung um seine Rotationsachse gedreht werden.

Bei der Herstellung von Reifen werden häufig Aufbautrommeln für die Herstellung der Reifenkarkasse eingesetzt. Auf derartigen Aufbautrommeln können unterschiedliche Reifenaufbauteile aufgewickelt und zusammengesetzt werden. Dadurch kann z.B. eine Karkasse für einen "Green Tire" erhalten werden. Um den Aufbau einer Karkassenstruktur für einen Reifen zu ermöglichen, rotieren solche Aufbautrommeln im Betrieb üblicherweise um eine Rotationsachse des späteren Reifens.

Um einen Reifen oder ein Reifenaufbauteil zum Zweck der Bearbeitung zu rotieren, kann der Reifen bzw. das Reifenaufbauteil auf eine Aufbautrommel aufgespannt werden, die im Betrieb mittels Antriebsmitteln in Rotation versetzt wird. Solche Aufbautrommeln sind in radialer Richtung, d.h. quer zu einer Rotationsachse der Aufbautrommel, in gewissen Grenzen expandierbar. Dadurch kann ein Auflagebereich oder eine Auflagefläche der Aufbautrommel für den Reifen bzw. das Reifenaufbauteil mit einem bestimmten Umfang erhalten werden, z.B. um einen Reifen bestimmter Größe aufzuspannen oder um eine Karkassenstruktur mit einer gewünschten Größe herzustellen. Es sind Aufbautrommeln bekannt, die einen pneumatischen Antrieb haben, um die Aufbautrommel im Betrieb auf eine Sollgröße zu expandieren. Eine Rückführung der Aufbautrommel in eine Ausgangsgröße, z.B. durch Zusammenschieben von Trommelsegmenten, kann durch eine Eigenspannung der aufgezogenen Karkasse bzw. des aufgespannten Reifens erfolgen. Dadurch wird die Konstruktion des Pneumatikantriebs zwar vereinfacht. Allerdings erfolgt das Zusammenschieben der Trommelsegmente dann relativ langsam und ggf. auch nicht vollständig, was sich nachteilig auf die Effizienz der Aufbautrommel auswirkt. Sofern eine Aufbautrommel einen Pneumatikantrieb aufweist, der ein aktives Zusammenschieben der Trommelsegmente unterstützt, kann es problematisch sein, dass ein solcher Pneumatikantrieb aufwendig konstruiert ist und/oder relativ viel Bauraum benötigt. Beides kann sich nachteilig auf einen effizienten Betrieb der Aufbautrommel auswirken.

Es ist daher eine Aufgabe der vorliegenden Erfindung, ein Spannsystem für ein Reifenelement, ein Verfahren zum Aufspannen eines Reifenelements auf eine Trommel und ein Reifenbearbeitungsgerät mit einem Spannsystem bereitzustellen, mit denen die zuvor genannten Nachteile reduziert und bevorzugt vermieden werden.

Diese Aufgabe wird durch ein Spannsystem nach Patentanspruch 1, ein Verfahren nach Patentanspruch 13 und ein Reifenbearbeitungsgerät nach Patentanspruch 14 gelöst.

Die Erfindung betrifft ein Spannsystem für zumindest ein Reifenelement, insbesondere für einen (Fahrzeug-)Reifen, besonders bevorzugt für einen Reifen ohne Felge bzw. einen felgenlosen Reifen. Ein Reifenelement kann ein Reifenaufbauteil sein, insbesondere für die Herstellung einer Reifenkarkasse und/oder für die Herstellung eines "Green Tires". Das Spannsystem kann in Alleinstellung realisiert sein. Weiterhin kann das Spannsystem Teil eines Reifenbearbeitungsgeräts sein und/oder kann dazu ausgebildet sein, um in Kombination mit einer Reifenbearbeitungseinheit betrieben zu werden.

Das Spannsystem hat eine Trommel mit mehreren, d.h. zwei oder mehr, Trommelsegmenten, welche Trommel zur Aufnahme, bevorzugt zum reversiblen Aufspannen, des zumindest einen Reifenelements, insbesondere eines felgenlosen Reifens, ausgebildet ist. Die Trommel kann, je nach Verwendung, auch als Aufbautrommel oder Reifenbautrommel bezeichnet werden. Das Spannsystem hat einen Spannkonus, auf dem zwei oder mehr Trommelsegmente bewegbar gelagert sind. Der Spannkonus ist dazu ausgebildet, um vermittels einer Linearbewegung entlang seiner Längserstreckung bzw. in einer Längsrichtung des Spannkonus eine Position der Trommelsegmente zu verändern, insbesondere bezogen auf eine Antriebswelle und/oder eine Hohlwelle des Spannsystems. Das Spannsystem hat einen steuerbaren Pneumatikantrieb, der dazu ausgebildet ist, um den Spannkonus in bzw. entlang dessen Längsrichtung in unterschiedliche Richtungen zu bewegen. Unter einem Spannkonus, auch bezeichnet als Konus, wird ein technisches Bauteil verstanden, das die äußere Form (Grundform) eines Kegels hat, insbesondere eines Kegelstumpfs. Der Spannkonus kann einen Grundkörper haben, der im Wesentlichen die Form eines Kegels hat, bevorzugt eines Kegelstumpfs, insbesondere eines hohlen Kegelstumpfs. Ein Grundkörper des Spannkonus kann, abschnittsweise oder vollständig, keilförmig oder keilartig ausgebildet sein.

Der (Spann-)Konus hat einen ersten Kolbenabschnitt, der für eine Bewegung des Spannkonus in eine erste Richtung ausgebildet ist. Der (Spann-)Konus hat einen zweiten Kolbenabschnitt, der für eine Bewegung des Spannkonus in eine entgegengesetzte, zweite Richtung ausgebildet ist.

Erfindungsgemäß sind der erste Kolbenabschnitt und der zweite Kolbenabschnitt an derselben Seite und/oder in derselben Seite des Spannkonus angeordnet bzw. ausgebildet. Bei dieser Seite handelt es sich bevorzugt um eine Grundfläche eines Kegels, insbesondere um eine größere von zwei parallelen Flächen eines Kegelstumpfs (also die eigentliche Grundfläche eines Kegelstumpfs). Entsprechend sind der erste und der zweite Kolbenabschnitt beide an bzw. in derselben Seite des Konus ausgebildet, welche Seite quer zur Längsrichtung und/oder quer zur Bewegungsrichtung des Konus verläuft, insbesondere orthogonal dazu. Bevorzugt sind der erste und der zweite Kolbenabschnitt beide durch eine (dieselbe) Grundfläche des Konus und/oder in einer (derselben) Grundfläche des, insbesondere kegelstumpfartigen, Konus gebildet. Mit anderen Worten können der erste und der zweite Kolbenabschnitt beide durch einen oder in einem (demselben) Bereich des Konus realisiert sein, welcher Bereich eine Grundfläche des, insbesondere kegelstumpfartigen, Konus entspricht und/oder diese umfasst.

Vorteilhafterweise kann der Pneumatikantrieb einen "Kolben-im-Kolben-Mechanismus" haben. Entsprechend kann der Spannkonus einen (einzigen) Kolben mit zwei Kolbenabschnitten aufweisen, die jeweils als Kolben wirken, wobei die jeweiligen Kolbenabschnitte eine unterschiedliche Bewegungsrichtung des Spannkonus bewirken (sobald sie mit Druckluft beaufschlagt werden) und/oder von unterschiedlichen Druckkammern aus beaufschlagt werden. Folglich kann die Grundfläche des Konus, z.B. ein Boden des Konus, eine Doppelfunktion haben und kann gleichzeitig zwei unterschiedliche Druckkammern des Pneumatikantriebs begrenzen. Vorteilhafterweise kann der Spannkonus einen doppelt wirkenden Kolben umfassen. Durch den "Kolben-im-Kolben-Mechanismus" kann der Pneumatikantrieb besonders kompakt sein. Weiterhin kann der Pneumatikantrieb möglichst effizient konstruiert sein, z.B. hinsichtlich Bauraum und der benötigten Teile.

Weiter vorteilhaft kann durch den "Kolben-im-Kolben-Mechanismus" bewirkt werden, dass der Spannkonus aktiv eingefahren werden kann. Dadurch kann das Einfahren des Spannkonus und die Demontage des Reifens bzw. des Reifenelements und damit der gesamte Prozess beschleunigt werden. Beispielsweise kann ein felgenloser Reifen besonders schnell und einfach auf der Trommel vorübergehend montiert werden, was einen Schneidprozess begünstigt. Weiterhin vorteilhaft kann die Zuverlässigkeit des Spannsystems erhöht werden. Dadurch kann auf zusätzliche Mittel, die z.B. die Trommelsegmente mittels Vorspannung zusammenziehen, verzichtet werden. Letzteres kann zu Einschränkungen im Hubbereich des Spannkonus führen. Weiterhin vorteilhaft erfolgt das Einfahren und das Ausfahren des Spannkonus jeweils mittels Überdruck. Folglich muss zur Bewegung der Trommelsegmente kein Unterdruck erzeugt werden.

Die Erfindung betrifft weiterhin ein Verfahren zum Aufspannen eines Reifenelements, insbesondere eines (Fahrzeug-)Reifens, besonders bevorzugt eines Reifens ohne Felge bzw. eines felgenlosen Reifens, auf eine Trommel eines Spannsystems gemäß der Erfindung. Das Spannsystem, an dem das Verfahren durchgeführt wird, kann einige oder alle Weiterbildungen haben, die in der Patentanmeldung offenbart sind. In dem Verfahren wird zumindest einmalig ein erster Kolbenabschnitt des Spannkonus mit Druckluft beaufschlagt, um den Spannkonus in eine erste Richtung zu bewegen zum Aufspannen des Reifenelements auf die Trommel. Durch eine Druckbeaufschlagung des ersten Kolbenabschnitts wird der Spannkonus relativ zur Hohlwelle und/oder Antriebswelle des Spannsystems bewegt und dadurch ausgefahren, wobei die Trommel in Umfangsrichtung expandiert wird. Der erste Kolbenabschnitt kann derart mit Druckluft beaufschlagt werden, dass eine Auflagefläche bzw. ein Auflagebereich der Trommel für das Reifenelement einen bestimmten Umfang hat. Dadurch kann ein bestimmter (Außen)Durchmesser der Trommel eingestellt werden.

Bevorzugt kann in dem Verfahren zunächst ein Reifenelement, z.B. ein felgenloser Reifen, auf der Auflagefläche angeordnet werden, wobei die Trommel in einem (nicht expandierten) Ruhezustand ist bzw. eine Ausgangsgröße hat. Anschließend kann der erste Kolbenabschnitt mit Druckluft beaufschlagt werden, um die Trommel auf eine Sollgröße zu expandieren und/oder um die Trommel vorübergehend in der Sollgröße zu halten. Bevorzugt erfolgt eine Bearbeitung des Reifenelements, z.B. des Reifens, während die Trommel ihre Sollgröße hat. Die Sollgröße kann in Abhängigkeit des zu bearbeitenden Reifenelements bestimmt werden, insbesondere abhängig von den Reifenmaßen und/oder dem Felgendurchmesser. Bevorzugt kann in dem Verfahren vorgesehen sein, insbesondere sobald die Bearbeitung des Reifenelements beendet ist, dass der zweite Kolbenabschnitt mit Druckluft beaufschlagt wird. Optional kann die Druckbeaufschlagung des ersten Kolbenabschnitts, z.B. gleichzeitig oder kurz vorher, beendet werden. Dadurch wird der Spannkonus relativ zur Hohlwelle und/oder Antriebswelle in die entgegengesetzte Richtung bewegt und dadurch eingefahren, wobei die Trommel in Umfangsrichtung verkleinert wird. Dadurch kann die Trommel aktiv in die Ausgangsgröße bzw. in den Ruhezustand überführt werden. Vorteilhafterweise kann durch das aktive Einfahren des Konus erreicht werden, dass der Konus besonders schnell und auch vollständig eingefahren wird, so dass die Trommel in eine kleinstmögliche Ausgangsgröße verbracht wird. Das ist ein Vorteil gegenüber Aufbautrommeln, die nur für eine aktive Expansion ausgelegt sind.

Die Erfindung betrifft weiterhin ein Reifenbearbeitungsgerät mit einer Reifenbearbeitungseinheit, insbesondere einer Reifenschneidemaschine, und mit einem Spannsystem gemäß der Erfindung. Auch in diesem Fall kann das Spannsystem einige oder alle Weiterbildungen haben, die in der Patentanmeldung offenbart sind. Das Spannsystem kann separat gegenüber der Reifenbearbeitungseinheit ausgebildet sein und/oder kann (nur) vorübergehend mit dieser funktional zusammenwirken. Es ist auch möglich, dass das Spannsystem ein fester Bestandteil des Reifenbearbeitungsgeräts ist und/oder fest mit der Reifenbearbeitungseinheit verbunden ist.

Die Reifenbearbeitungseinheit ist vorzugsweise eine Reifenschneidemaschine zum (Nach-)Schneiden eines Profils mit zumindest einer Rille in einer Lauffläche des Reifens. Dann bilden das Spannsystem und die Reifenschneidemaschine das Reifenbearbeitungsgerät. Eine vorteilhafte Reifenschneidemaschine ist in EP 4 265 403 A1 beschrieben. Entsprechend kann ein Reifenbearbeitungsgerät gemäß der Erfindung eine Reifenschneidemaschine aus EP 4 265 403 A1 aufweisen, insbesondere mit einigen oder allen darin beschriebenen vorteilhaften Weiterbildungen, und kann zusätzlich ein Spannsystem gemäß der Erfindung aufweisen. Bevorzugt können das Spannsystem und die Reifenschneidemaschine allgemein so zusammenwirken, dass ein bestimmungsgemäß auf der Trommel aufgespannter Reifen mittels der Reifenschneidemaschine bearbeitet werden kann, d.h., es kann ein Profil in die Lauffläche des Reifens geschnitten werden.

Prinzipiell kann das Spannsystem auch in Kombination mit einer anderen Vorrichtung zum (Nach-)Schneiden eines Reifenprofils eingesetzt werden. Es ist alternativ oder zusätzlich möglich, dass ein Reifenbearbeitungsgerät gemäß der Erfindung ein erfindungsgemäßes Spannsystem und zusätzlich eine andere Reifenbearbeitungseinheit aufweist, die eine Herstellung und/oder Bearbeitung, z.B. eine Nachbearbeitung, von (pneumatischen) Reifen, insbesondere Fahrzeugreifen, ermöglicht.

Weitere, besonders vorteilhafte Ausgestaltungen und Weiterbildungen der Erfindung ergeben sich aus den abhängigen Ansprüchen sowie der nachfolgenden Beschreibung, wobei die Ansprüche einer Anspruchskategorie auch analog zu den Ansprüchen und Beschreibungsteilen zu einer anderen Anspruchskategorie weitergebildet sein können und insbesondere auch einzelne Merkmale verschiedener Ausführungsbeispiele bzw. Varianten zu neuen Ausführungsbeispielen bzw. Varianten kombiniert werden können. Beispielsweise kann das Verfahren gemäß der Erfindung zusätzliche Merkmale haben, die analog zu den beschriebenen Vorrichtungsmerkmalen des Spannsystems sind.

In der Beschreibung wird davon ausgegangen, ohne eine Beschränkung darauf, dass ein felgenloser Reifen auf die Trommel aufgespannt wird, z.B. zum Zweck des (Nach-)Schneidens eines Profils. Die Trommel ist vorzugsweise dazu ausgebildet, um allgemein (pneumatische) Reifen aufzuspannen, insbesondere Reifen von Fahrzeugen. Die nachfolgend beschriebenen Weiterbildungen des Spannsystems können bei einem Spannsystem in Alleinstellung und bei einem Spannsystem eines Reifenbearbeitungsgeräts realisiert sein. Die Rotationsachse der Trommel im Betrieb ist vorzugsweise koaxial zu einer Rotationsachse des Spannkonus. Die Rotationsachse des Spannkonus ist vorzugsweise parallel zur Längsrichtung des Spannkonus und/oder entspricht einer Mittellängsachse des Spannkonus. Unter der Längsrichtung des Spannkonus wird die Richtung einer längsten Erstreckung in eine Richtung verstanden. Die Längsrichtung des Spannkonus ist bevorzugt quer, insbesondere orthogonal, zu den beiden parallelen Flächen bzw. Seiten des Konus, insbesondere des Kegelstumpfs. Sofern ein Reifen auf der Trommel aufgespannt ist, kann eine Rotationsachse des Reifens einer üblichen bzw. bestimmungsgemäßen Rotationsachse des Reifens im Betrieb an einem Fahrzeug entsprechen.

Vorzugsweise sind der erste Kolbenabschnitt und der zweite Kolbenabschnitt (beide) Bestandteil des bewegbaren Spannkonus. Der erste Kolbenabschnitt und der zweite Kolbenabschnitt können jeweils durch den Spannkonus selbst gebildet sein, insbesondere durch ein Material des Spannkonus. Entsprechend sind der erste Kolbenabschnitt und der zweite Kolbenabschnitt selbst beweglich ausgebildet. Der erste und der zweite Kolbenabschnitt können, insbesondere gleichzeitig, in Längsrichtung des Spannkonus und/oder längs einer Hohlwelle und/oder Antriebswelle des Spannsystems bewegt werden (im Betrieb), bevorzugt in unterschiedliche Richtungen. Bevorzugt bilden der erste Kolbenabschnitt und der zweite Kolbenabschnitt mit dem (restlichen) Spannkonus, insbesondere einem Grundkörper, eine Bewegungseinheit, die im Betrieb gemeinsam bewegt wird.

Vorzugsweise ist das Spannsystem so realisiert, dass der Spannkonus einen ersten Kolbenabschnitt hat, der zumindest teilweise durch eine Grundfläche des Spannkonus gebildet ist. Bevorzugt kann ein Boden des Spannkonus (Konusboden) zumindest einen Teil des ersten Kolbenabschnitts bilden. Diese Grundfläche kann die (flächenmäßig) größere von zwei parallelen Seiten eines Kegelstumpfs sein oder diese bilden. Die Grundfläche kann einer Querschnittfläche an der breitesten Stelle des Konus entsprechen, optional mit Anbauten des Konus. Solche Anbauten können aus der Grundfläche hinausragen. Der erste Kolbenabschnitt kann durch die Grundfläche bzw. den Konusboden selbst und durch Anbauten im Bereich des Konusbodens ausgebildet sein. Derartige Anbauten können an einem Grundkörper des Spannkonus angeordnet sein. Insbesondere im Bereich solcher Anbauten, die z.B. Dichtelemente aufweisen oder bilden, kann die äußere Form des Konus von einem Kegel oder Kegelstumpf abweichen. Der Spannkonus hat, wie beschrieben, vorzugsweise die äußere Form eines Kegelstumpfs, insbesondere der Grundkörper des Konus. Bevorzugt hat der Spannkonus, insbesondere der Kegelstumpf, in seinem Innern einen Hohlraum, der sich von der Grundfläche bis zu einer gegenüberliegenden Deckfläche erstreckt. Der vorzugsweise zylinderartige Hohlraum (Zylinderhohlraum) durchdringt den Kegelstumpf bevorzugt in Längsrichtung vollständig. Bevorzugt ist dieser Zylinderhohlraum endseitig verschlossen, insbesondere luftdicht. Unter der Längsrichtung des Spannkonus wird die Richtung orthogonal zur Grundfläche verstanden. Der Hohlraum (Zylinderhohlraum) und/oder die Längsrichtung verläuft vorzugsweise koaxial zu einer Rotationsachse des Spannkonus bzw. Kegelstumpfs. Dieser Hohlraum (Zylinderhohlraum) bildet vorzugsweise eine zweite Druckkammer des Pneumatikantriebs. Das wird später beschrieben.

Vorzugsweise ist der zweite Kolbenabschnitt des Spannkonus, insbesondere vollständig, durch den ersten Kolbenabschnitt (mit-)gebildet. Entsprechend kann derselbe Bereich des Spannkonus, insbesondere ein den Konusboden und/oder die Grundfläche umfassender Bereich, den ersten Kolbenabschnitt und gleichzeitig den zweiten Kolbenabschnitt bilden. Dabei ist es bevorzugt, dass die beiden Kolbenabschnitte von unterschiedlichen Seiten (des Konusbodens) aus mit Druckluft beaufschlagbar sind und/oder unterschiedlichen Druckkammern zugeordnet sind. Insbesondere können der erste und der zweite Kolbenabschnitt in demselben Kolben des Spannkonus ausgebildet sein. Vorzugsweise ist der zweite Kolbenabschnitt (nur) im Hohlraum des Spannkonus angeordnet und füllt einen Bereich zwischen einer Innenwand des Spannkonus, die den Hohlraum bildet, und einer Hohlwelle des Spannsystems (vollständig) aus. Der zweite Kolbenabschnitt kann durch ein Element in Form eines Kreisrings ausgebildet sein. Das kreisringförmige Element und/oder der zweite Kolbenabschnitt kann vorzugsweise als separates Teil hergestellt und anschließend mit dem Konusboden verbunden werden, z.B. verschraubt. Vorteilhafterweise kann eine Seite des kreisringförmigen oder kreisringartigen Elements (nur) den zweiten Kolbenabschnitt bilden, wobei eine andere, gegenüberliegende Seite des(-selben) kreisringförmigen Elements einen Teil des ersten Kolbenabschnitts bildet. Besonders bevorzugt liegen der erste Kolbenabschnitt und der zweite Kolbenabschnitt, insbesondere in einem Konus-Längsschnitt, auf gegenüberliegenden Seiten des Konusbodens bzw. der zugeordneten Grundfläche. Mit anderen Worten können der erste Kolbenabschnitt und der zweite Kolbenabschnitt einander gegenüberliegen, bezogen auf den Konusboden bzw. die Grundfläche.

Vorzugsweise ist der zweite Kolbenabschnitt in radialer Richtung, d.h. quer zur Bewegungsrichtung des Spannkonus und/oder zu dessen Längsrichtung, vollständig innerhalb des ersten Kolbenabschnitts angeordnet. Mit anderen Worten kann der (gesamte) zweite Kolbenabschnitt in Umfangsrichtung und/oder in einem Konus-Querschnitt vollständig innerhalb des Umfangs des ersten Kolbenabschnitts liegen. Vorteilhafterweise kann ein (derselbe) Bereich des Spannkonus gleichzeitig den ersten Kolbenabschnitt und den zweiten Kolbenabschnitt bilden, wobei der erste Kolbenabschnitt an einer ersten Seite und der zweite Kolbenabschnitt an einer anderen, vorzugsweise gegenüberliegenden, zweiten Seite des Bereichs ausgebildet ist.

Vorzugsweise sind der erste Kolbenabschnitt und der zweite Kolbenabschnitt, bezogen auf die Längsrichtung des Spannkonus, jeweils bewegbar auf einer Hohlwelle des Spannsystems gelagert, wobei die Hohlwelle den Spannkonus führt. Die Hohlwelle kann eine Antriebswelle des Spannsystems sein und/oder kann, insbesondere koaxial, damit verbunden sein. Beispielsweise kann die Hohlwelle endseitig an die Antriebswelle anschließen und kann mittels der Antriebswelle in Rotation versetzt werden. Entsprechend kann der gesamte Spannkonus, d.h. mitsamt der beiden Kolbenabschnitte, relativ zur Hohlwelle pneumatisch bewegt werden. Bevorzugt haben der erste und/oder der zweite Kolbenabschnitt eine (mittige) Aussparung bzw. Öffnung, wobei der jeweilige Kolbenabschnitt darüber (in Längsrichtung) bewegbar und abgedichtet auf der Hohlwelle gelagert ist. Bevorzugt ist der Spannkonus, bezogen auf eine Rotationsrichtung der Hohlwelle im Betrieb, unbeweglich gegenüber der Hohlwelle und/oder der Antriebswelle. Das bedeutet, dass der Spannkonus im Betrieb mitrotiert und gleichzeitig in Längsrichtung bewegbar ist. Die Hohlwelle kann Teil einer Antriebswelle des Spannsystems sein oder kann, zumindest abschnittweise, die Antriebswelle bilden. Die Antriebswelle kann eine Antriebsachse des Spannsystems bilden. Die Antriebsachse ist vorzugsweise koaxial zur Rotationsachse der Trommel und/oder zu einer Rotationsachse eines Reifens, der auf die Trommel aufgespannt ist. Je nach Ausführung, kann die Antriebsachse des Spannsystems durch die Antriebsachse der Reifenschneidemaschine gebildet sein. Dann kann die Antriebswelle des Spannsystems einer Antriebswelle der Reifenschneidemaschine entsprechen und/oder kann zumindest damit verbunden sein, insbesondere koaxial. Dann kann das Spannsystem z.B. als Teil einer Reifenaufnahme der Reifenschneidemaschine realisiert sein. Allgemein kann die Antriebswelle des Spannsystems steuerbare Antriebsmittel aufweisen, um die Antriebswelle im Betrieb, z.B. in unterschiedliche Richtungen, zu rotieren.

Der Antrieb des Konus erfolgt vorzugsweise pneumatisch. Vorzugsweise umfasst das Spannsystem einen steuerbaren Pneumatikantrieb oder Pneumatikaktor mit zwei Druckkammern, wobei jede Druckkammer separat mit Druckluft beaufschlagbar ist, um den Spannkonus in eine unterschiedliche Richtung zu bewegen. Bevorzugt trennt die Grundfläche des Spannkonus (Konusboden), optional mit zugehörigen Anbauten, die beiden Druckkammern gasdicht voneinander. Im Betrieb kann die jeweilige Druckkammer und/oder der jeweilige Kolbenabschnitt mit unter Überdruck stehender Druckluft befüllt bzw. beaufschlagt werden. Unter Überdruck wird ein Druck verstanden, der höher ist, als ein Umgebungsdruck, insbesondere höher als der atmosphärische Druck.

Der Pneumatikantrieb des Spannsystems hat vorzugsweise eine erste Druckkammer, die durch den ersten Kolbenabschnitt begrenzt bzw. gebildet ist. Diese erste Druckkammer kann durch den ersten Kolbenabschnitt (als bewegliches Teil) zusammen mit einem umgebenden Gehäuse des Pneumatikantriebs gebildet sein. Vorzugsweise kann der Spannkonus in diesem Gehäuse bewegbar und dichtend gelagert sein. Diese erste Druckkammer, insbesondere der erste Kolbenabschnitt, z.B. der Konusboden, kann mit Druckluft beaufschlagt werden, um den Spannkonus linear zu bewegen (auszufahren), wobei die Trommelsegmente ausgefahren werden. Dadurch kann die Trommel, insbesondere die Auflagefläche, in Umfangrichtung expandiert werden. Dadurch kann ein Reifen auf die Trommel aufgespannt werden. Die erste Druckkammer ist bevorzugt ausschließlich (nur) außerhalb des Spannkonus ausgebildet.

Der Pneumatikantrieb hat vorzugsweise eine weitere, zweite Druckkammer, die getrennt von der ersten Druckkammer realisiert ist. Vorzugsweise kann der zweite Kolbenabschnitt (als bewegliches Teil) zusammen mit dem umgebenden Gehäuse des Spannkonus und der darin befindlichen Hohlwelle einen abgeschlossenen Hohlraum bzw. die zweite Druckkammer bilden. Bevorzugt kann eine Innenwand des Spannkonus, die den Hohlraum im Spannkonus bildet, gemeinsam mit dem kreisringartigen Element, das den zweiten Kolbenabschnitt bildet sowie einem Dichtelement auf der Hohlwelle, das vorzugsweise an einem dem zweiten Kolbenabschnitt gegenüberliegenden Ende des Zylinderhohlraums liegt, die zweite Druckkammer bilden. Vorzugsweise ist die Hohlwelle in der zweiten Druckkammer angeordnet und durchdringt diese der Länge nach. Folglich trennt das kreisringartige Element des Spannkonus vorzugsweise die erste und die zweite Druckkammer voneinander.

Die zweite Druckkammer ist bevorzugt ausschließlich (nur) innerhalb des Spannkonus ausgebildet. Die zweite Druckkammer wird durch den zweiten Kolbenabschnitt begrenzt bzw. gebildet. Dazu kann zumindest ein Teil der Hohlwelle innerhalb des Spannkonus angeordnet und von einem Hohlraum (Zylinderhohlraum) umgeben sein. Entsprechend kann die Hohlwelle vorzugsweise koaxial zur Rotationsachse des Spannkonus sein. In dem Hohlraum (Zylinderhohlraum) im Spannkonus kann die zweite Druckkammer des Pneumatikantriebs gebildet sein, die durch den zweiten Kolbenabschnitt begrenzt ist. Die zweite Druckkammer kann gegenüberliegend vom kreisringartigen Element bzw. vom zweiten Kolbenabschnitt, bezogen auf die Längserstreckung der Hohlwelle, von einem Dichtelement begrenzt sein, das unbeweglich gegenüber der Hohlwelle ist.

Vorzugsweise hat der Hohlraum (Zylinderhohlraum) im Innern des Spannkonus, der die zweite Druckkammer (mit-)bildet bzw. innerhalb dessen die zweite Druckkammer gebildet ist, eine langgestreckte Form und verläuft parallel zur Längsrichtung des Spannkonus und/oder längs der Hohlwelle. Ein Durchmesser dieses Hohlraums (Zylinderhohlraum) im Innern des Spannkonus ist in radialer Richtung, d.h. quer zur Längsrichtung des Spannkonus, höchstens 40%, vorzugsweise höchstens 30%, bevorzugt höchstens 20%, eines Durchmessers der Grundfläche des gesamten Spannkonus (Konusboden) bzw. eines Durchmessers des ersten Kolbenabschnitts. Der Spannkonus kann durch einen Materialkörper gebildet sein, insbesondere der Grundkörper des Konus, welcher Materialkörper in seinem Innern den Hohlraum aufweist, der eine zweite Druckkammer bildet, wobei der Materialkörper im Übrigen hohlraumfrei ist in seinem Innern.

Vorzugsweise kann die zweite Druckkammer mittels der Hohlwelle mit Druckluft beaufschlagt werden, um den Spannkonus linear zu bewegen (einzufahren), wobei die Trommelsegmente eingefahren werden. Dadurch kann die Trommel, insbesondere die Auflagefläche, in Umfangrichtung verkleinert werden. Dadurch kann ein Reifen von der Trommel gelöst werden. Durch das Einfahren kann der Spannkonus in eine Ruheposition bewegt werden (Ruhezustand bzw. Ausgangsgröße der Trommel). Vorzugsweise wird dazu nur ein bestimmter Teil vom Konusboden, der von innerhalb der zweiten Druckkammer zugänglich ist (nur der zweite Kolbenabschnitt), insbesondere das kreisringförmige Element, mit Druckluft beaufschlagt. Vorteilhafterweise kann die den Konus führende Hohlwelle in einem Konusinnenraum von einem weiteren Zylinderraum umgeben sein, welcher Zylinderraum mittels dieser Hohlwelle mit Druckluft beaufschlagt werden kann, wobei infolgedessen und mittels des Konusbodens als Kolbenfläche (zweiter Kolbenabschnitt) der Konus in seine Ruheposition überführbar ist bzw. überführt wird. Dadurch werden ein Ruhezustand bzw. eine Ausgangsgröße der Trommel erhalten.

Vorteilhafterweise kann durch den "Kolben-im-Kolben-Mechanismus" der zweite Kolbenabschnitt Teil des ersten Kolbenabschnitts sein und/oder (vollständig) innerhalb dessen Umfangs ausgebildet sein. Derselbe Spannkonus kann einen ersten Kolben(-Abschnitt) aufweisen, der (nur) einer ersten Druckkammer zugeordnet ist, und einen unterschiedlichen, zweiten Kolben(-Abschnitt), der (nur) einer anderen, zweiten Druckkammer zugeordnet ist. Der Spannkonus kann ein (zusammenhängendes) bewegliches Bauteil bilden, das zwei unterschiedliche Kolben umfasst, wobei jeder Kolben zusammen mit einem zugeordneten umgebenden Gehäuse einen abgeschlossenen Hohlraum bildet, dessen Volumen sich durch eine Bewegung des Konus in seiner Längsrichtung verändert. Die beiden Kolben des Spannkonus sind vorzugsweise durch den ersten und zweiten Kolbenabschnitt gebildet.

Der Pneumatikantrieb hat vorzugsweise eine Druckluftversorgung, um die beiden Druckkammern getrennt voneinander mit Druckluft zu beaufschlagen. Vorzugsweise kann eine Antriebswelle (intern) mehrere Leitungen für Druckluft beinhalten, die mittels Drehdurchführungen mit einer externen Druckluftversorgung verbunden sind. Beispielswiese kann eine Druckleitung der Antriebswelle in die erste Druckkammer münden. Eine weitere Druckleitung der Antriebswelle kann in die Hohlwelle münden, zur Versorgung der zweiten Druckkammer. Eine andere Druckleitung der Antriebswelle kann der Trommel zugeordnet sein, um einen Innenraum eines aufgespannten Reifens mit Druckluft zu füllen.

Vorzugsweise ist die Trommel größenverstellbar ausgebildet, so dass Reifen mit unterschiedlichem Durchmesser aufgespannt werden können, insbesondere felgenlose Reifen. Die Trommel kann dazu ausgebildet sein, um Reifen mit einer Felgengröße von 17,5 Zoll bis 22,5 Zoll (inklusive üblicher Zwischengrößen) aufzuspannen. Vorteilhafterweise kann das Spannsystem größenvariabel sein (bezogen auf die Reifengröße), insbesondere stufenlos größenvariabel. Vorteilhafterweise kann dasselbe Spannsystem dazu ausgebildet sein, um unterschiedliche Reifengrößen (im zuvor genannten Bereich) aufzuspannen, ohne Komponentenwechsel oder Demontage von Teilen des Spannsystems, d.h. modifikationsfrei. Rein beispielhaft kann ein vollständiger Hub des Spannkonus eine Änderung des äußeren Durchmessers der Trommel von bis zu 200 mm bewirken. Beispielsweise kann ein äußerer Durchmesser der Trommel, vorzugsweise an der Auflagefläche, variabel zwischen 375 mm, bevorzugt 400 mm, und 595 mm sein, insbesondere variabel zwischen 375 mm und 584 mm (bei einem aufgespannten Reifen).

Alternativ oder zusätzlich ist die Trommel größenverstellbar ausgebildet, so dass Reifen, insbesondere Nutzfahrzeugreifen, mit unterschiedlicher Breite auf die Trommel aufgespannt werden können. Dazu kann die Trommel eine oder mehrere wechselbare Bordscheiben aufweisen. Vorteilhafterweise kann eine Breite der Trommel bzw. deren Auflagefläche für den Reifen, die orthogonal zur Umfangsrichtung ist, schrittweise mittels (austauschbarer) Bordscheiben geändert werden. Vorzugsweise können mehrere auswechselbare Bordscheiben, insbesondere gleichmäßig verteilt, entlang eines (äußeren) Umfangs der Trommel angeordnet sein. Das kann zumindest einseitig, vorzugsweise beidseitig, der Auflagefläche entlang des Umfangs der Trommel erfolgen. Vorteilhafterweise können dadurch Reifen mit allen gängigen Breiten von (Nutz-)Fahrzeugen aufgespannt werden. Vorzugsweise kann das Spannsystem über zwei oder mehr wechselbare Bordscheiben verfügen, die ohne Werkzeug an der Trommel de-/montiert werden können, z.B. durch Einklicken, um Reifen mit einer Breite im Bereich von 195 mm bis 445 mm spannen zu können. Vorteilhafterweise können die Bordscheiben besonders schnell und mühelos montiert bzw. gewechselt werden. Vorzugsweise sind die jeweiligen Bordscheiben in bzw. an dem Spannsystem einrastbar und ohne den Einsatz von Werkzeug montier- und demontierbar.

Vorteilhafterweise ist die Trommel größenverstellbar so ausgebildet, dass im Ruhezustand der Trommel auch Felgen, z.B. mit aufgezogenem Reifen, mit einem Durchmesser von 19,5 Zoll (oder größer) über die Trommel bewegt werden können. Das bedeutet, die Trommel in der Ausgangsgröße (Spannkonus eingefahren) kann durch die Öffnung einer üblichen Felge mit einem Durchmesser von 19,5 Zoll hindurchgeführt werden. Vorteilhafterweise kann dadurch ein Spannsystem mit einer besonders kompakten Trommel bereitgestellt werden. Dadurch ist das Spannsystem flexibel einsetzbar und ermöglicht, z.B. an einer Reifenschneidemaschine, einen kombinierten Betrieb mit felgenlosen Reifen und/oder Reifen auf Felgen. Weiterhin vorteilhaft kann eine Trommel, die vorzugsweise stufenlos größenverstellbar ist, auch dazu genutzt werden, um Karkassenstrukturen unterschiedlicher Größe unter Nutzung des Spannsystems herzustellen.

Das Spannsystem ist vorzugsweise so ausgebildet, dass die Trommelsegmente jeweils einen Spannkamm und einen daran anschließenden Spannkeil aufweisen, wobei der Spannkeil außen auf dem Spannkonus, insbesondere gleitend, aufliegt. Das Spannsystem kann Führungsmittel aufweisen, um den jeweiligen Spannkeil längs des Spannkonus zu führen, insbesondere entlang einer Bahn. Beispielsweise kann jeweils ein Spannkeil, z.B. ein Gleitsegment, in einer Nut geführt und damit in tangentialer Richtung fixiert oder stabilisiert sein, wobei die Nut in bzw. auf einer Gleitfläche des Spannkonus ausgebildet ist. Entsprechend kann der jeweilige Spannkeil bei einer Bewegung des Spannkonus entlang der Hohlwelle, z.B. in einer Nut, den Spannkonus hinaufgleiten oder hinabgleiten. Vorteilhafterweise sind die Spannkeile durch die (beidseitige) Führung gegen seitliches Verkippen gesichert. Beispielsweise kann zu beiden Seiten eines Spannkeils jeweils ein Führungselement aus gehärtetem Stahl angeordnet sein, z.B. Flacheisen.

Alternativ oder zusätzlich kann das Spannsystem Führungsmittel aufweisen, um den jeweiligen Spannkeil in einer Richtung quer zur Längsrichtung des Spannkonus, insbesondere in radialer Richtung, zu führen. Vorzugsweise kann in radialer Richtung (bezogen auf den Spannkonus) eine Führung des jeweiligen Spannkeils, z.B. eines Gleitsegments, durch eine in Längsrichtung (des Spannkonus) formschlüssige Führung erfolgen. Beispielsweise kann ein jeweiliger Spannkeil mittels einer Schwalbenschwanzführung geführt sein. Entsprechend kann der jeweilige Spannkeil bei einer Bewegung des Spannkonus entlang der Hohlwelle in radialer Richtung stabilisiert bzw. geführt sein. Beispielsweise kann eine Schwalbenschwanzführung aus gehärtetem Messing vorgesehen sein. Vorteilhafterweise kann das Spannsystem eine Gleitführung für die jeweiligen Trommelsegmente haben, um eine Führung längs oder in einer Richtung quer zur Längsrichtung vom Spannkonus oder für eine Kombination daraus. Vorteilhafterweise kann eine solche Gleitführung technisch relativ einfach realisiert sein. Vorzugsweise sind die Spannkeile, z.B. die Gleitsegmente, jeweils in Nuten auf einer Gleitfläche des Konus geführt und damit in tangentialer Richtung fixiert. Dabei kann auf eine radiale Fixierung der Spannkeile an der Gleitfläche des Konus verzichtet werden. Zusätzlich kann in radialer Richtung eine Führung der Spannkeile, z.B. der Gleitsegmente, durch eine in tangentialer Richtung formschlüssige Führung, z.B. in Form einer Schwalbenschwanzführung, vorgesehen sein. Besonders bevorzugt können die Führungsmittel, insbesondere der jeweilige Spannkeil, z.B. das Gleitsegment, und/oder die jeweilige Nut, aus Kunststoff bestehen und/oder kann Kunststoff umfassen, zumindest in einem Kontaktbereich der Führungsmittel. Als Kunststoff kann vorzugsweise PE-UHMW (Polyethylen ultrahochmolekular), z.B. PE1000, eingesetzt werden. Das kann sowohl für die Führungsmittel in Längsrichtung, als auch für die Führungsmittel in Querrichtung gelten.

Der Spannkonus, insbesondere dessen Gleitfläche für die Spannkeile, kann eine Oberfläche haben, die einen Winkel von etwa 20° bezogen auf die Rotationsachse des Spannkonus bildet. Vorzugsweise haben die Spannkeile eine zur Neigung des Spannkonus komplementäre (geneigte) Kontaktfläche. Vorzugsweise ist eine vom Spannkonus wegweisende Seite der Spannkeile parallel zur Hohlwelle ausgebildet. Die Spannkeile können vorzugsweise aus gehärtetem Werkzeugstahl sein. Die Spannkeile sind vorzugsweise endseitig, vom Spannkonus wegweisend, jeweils mit einem Spannkamm verbunden. Benachbarte Spannkämme sind vorzugsweise so ausgebildet, dass die einzelnen Kammglieder ineinandergreifen können. Die Spannkämme bilden die Auflagefläche für den Reifen, z.B. für den Reifenwulst. Bei einer bevorzugten Ausführungsform hat das Spannsystem zehn solcher Trommelsegmente, die jeweils separat ausgebildet sind. Die Trommelsegmente können miteinander die Trommel des Spannsystems bilden.

Durch eine Beaufschlagung der ersten Druckkammer, insbesondere des ersten Kolbenabschnitts, mit Druckluft, kann der Spannkonus entlang der Hohlwelle in eine erste Richtung bewegt werden, wobei die Spannkeile den Spannkonus hinaufgleiten, so dass die Spannkämme ausgefahren werden, d.h. ein radialer Abstand der Trommelsegmente zur Hohlwelle wird vergrößert. Dadurch wird ein Durchmesser und/oder ein Umfang der Trommel vergrößert, insbesondere der Auflagefläche der Trommel. Dadurch kann ein Reifen aufgespannt werden. Dadurch, dass die Verfahrstrecke des Spannkonus entlang der Hohlwelle (individuell) gesteuert werden kann, ist es möglich, unterschiedliche Durchmesser der Trommel einzustellen und im Betrieb zu halten. Vorteilhafterweise kann der Spannkonus schrittweise oder stückweise entlang der Hohlwelle bewegt werden (in beide Richtungen). Das beschriebene Vorgehen ist vorzugsweise Teil eines Verfahrens gemäß der Erfindung.

Durch eine Beaufschlagung der zweiten Druckkammer, insbesondere des zweiten Kolbenabschnitts, mit Druckluft, kann der Spannkonus entlang der Hohlwelle in eine zweite, entgegengesetzte Richtung bewegt werden, wobei die Spannkeile den Spannkonus hinabgleiten, so dass die Spannkämme eingefahren werden, d.h. ein radialer Abstand der Trommelsegmente zur Hohlwelle wird verkleinert. Dadurch kann ein Reifen von der Trommel gelöst werden. Das kann vorzugsweise Teil eines Verfahrens gemäß der Erfindung sein.

Vorzugsweise hat die Trommel ein Dichtelement, das den Spannkämmen außen aufliegt, insbesondere entlang des gesamten Umfangs der Trommel. Beispielsweise kann eine Gummibandage oder ein Gummiring der Trommel außen aufliegen, um einen Innenraum eines montierten Reifens gegenüber den Spannkämmen (luftdicht) abzudichten. Ein Gummiring kann z.B. eine Stärke von 10 mm haben. Vorteilhafterweise kann dadurch ein montierter Reifen mit einem bestimmten Luftdruck gefüllt werden, was sich günstig auf den Schneidvorgang auswirkt, da ein benötigter Gegendruck für eine Abstützvorrichtung bzw. ein Messer der Reifenschneidemaschine vorhanden ist. Vorteilhafterweise stellt das Spannsystem damit eine Spannvorrichtung für einen felgenlosen Reifen in Kombination mit einer Abdichtvorrichtung bereit.

Vorteilhafterweise kann das Spannsystem eine kombinierte Lösung bieten, mit der Reifen sowohl ohne als auch mitsamt Felge aufgespannt und/oder bearbeitet werden können. Entsprechend ist das Spannsystem vorzugsweise dazu ausgebildet, um mittels der Trommel einen felgenlosen Reifen an einer Antriebswelle des Spannsystems anzuordnen und kann zusätzlich Befestigungsmittel für eine Felge mit aufgezogenem Reifen haben. Durch die Befestigungsmittel kann also eine Felge mit Reifen an der Antriebswelle des Spannsystems drehbar angeordnet werden. Beispielsweise können endseitig an einer Antriebwelle Befestigungsmittel für eine Felge angeordnet sein, wobei (einwärts der Antriebswelle) die Trommel angeordnet ist. Vorteilhafterweise kann das Spannsystem, insbesondere die Trommel, bezüglich des Umfangs so dimensioniert sein und/oder so gesteuert werden, dass die Trommel in eine Felge eintauchen kann, z.B. in der Ausgangsgröße, um die Felge an der Antriebswelle zu montieren. Vorteilhafterweise stellt das Spannsystem eine Universallösung bereit, wobei ein Nutzer des Spannsystems wahlweise Reifen mit Felgen oder felgenlose Reifen aufspannen kann, ohne das Spannsystem zu modifizieren. Dadurch werden die Anwendungsmöglichkeiten für einen Nutzer erheblich erweitert. Es wäre prinzipiell auch möglich, dass gleichzeitig ein felgenloser Reifen auf der Trommel aufgespannt ist und ein Reifen mit Felge am Spannsystem montiert ist.

Das Spannsystem umfasst, wie beschrieben, eine steuerbare Antriebswelle, um die Trommel und den Spannkonus, optional weitere Elemente des Spannsystems, in Rotation zu versetzen. Dadurch kann ein aufgespannter Reifen geschnitten werden. Bei dieser Rotation ist auch die Hohlwelle in Rotation. Je nach Ausführung, kann die Antriebswelle des Spannsystems durch eine Antriebswelle einer Reifenschneidemaschine gebildet sein. Dann kann der Betrieb des Spannsystems, insbesondere der Pneumatikantrieb, durch eine Steuervorrichtung der Reifenschneidemaschine gesteuert werden. Es ist aber auch möglich, dass das Spannsystem unabhängig von einer Reifenschneidemaschine realisiert ist, wobei das Spannsystem eine (eigene) Antriebswelle umfasst, um einen aufgespannten Reifen oder allgemein die Trommel zu rotieren. Entsprechend kann das Spannsystem (eigene) steuerbare Antriebsmittel für die Antriebswelle haben und eine (eigene) Druckluftversorgung für den Pneumatikantrieb haben. Weiterhin kann das Spannsystem eine (eigene) Steuereinrichtung haben, um den Betrieb des Spannsystems, insbesondere den Pneumatikantrieb, zu steuern.

Die Erfindung wird im Folgenden unter Hinweis auf die beigefügten Figuren anhand von Ausführungsbeispielen noch einmal näher erläutert. Dabei sind in den verschiedenen Figuren gleiche Komponenten mit identischen Bezugsziffern versehen. Die Figuren sind in der Regel nicht maßstäblich. Es zeigen:

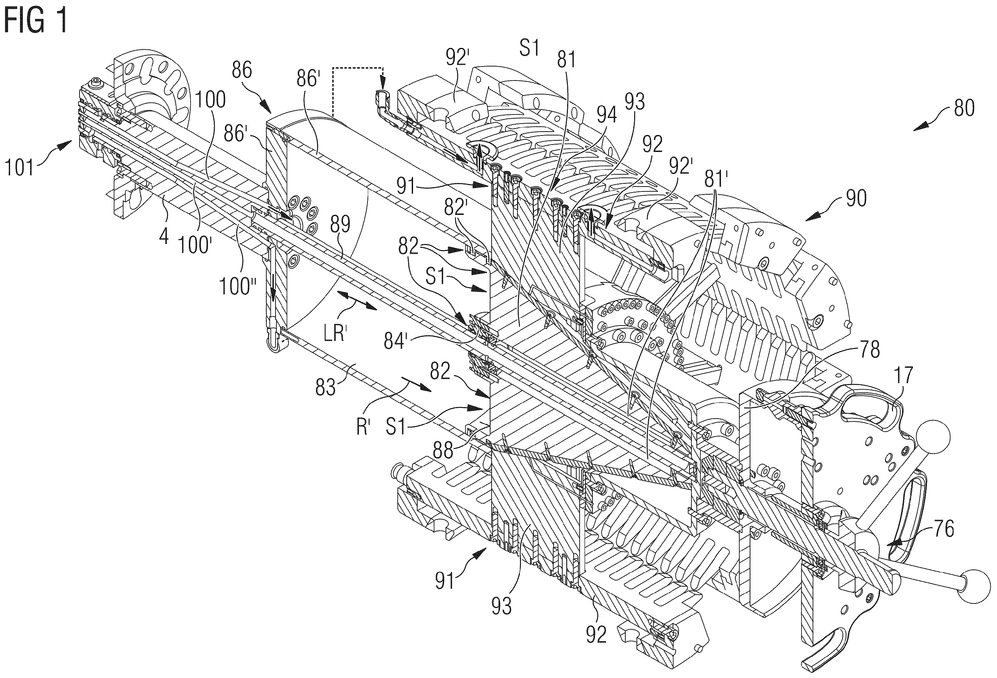

Figuren 1 bis 3 unterschiedliche und zum Teil vergrößerte Ansichten eines Spannsystems gemäß der Erfindung.

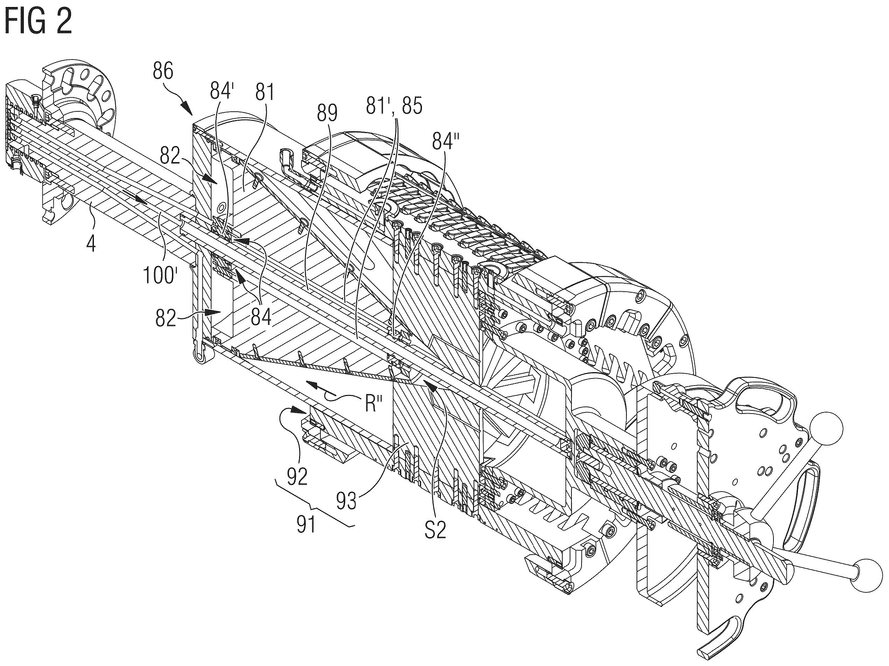

In Figur 1 und 2 ist eine perspektivische Schnittdarstellung eines Spannsystems 80 gemäß der Erfindung gezeigt. Da es sich in den beiden Figuren um dasselbe Spannsystem 80 in unterschiedlichen Betriebszuständen handelt, werden Figuren 1 und 2 gemeinsam beschrieben. Das Spannsystem 80 ist jeweils schematisch dargestellt. Das Spannsystem 80 hat einen Spannkonus 81, der in seiner Längsrichtung LR' beweglich auf einer Hohlwelle 89 gelagert ist und pneumatisch bewegt werden kann. Der Spannkonus 81 hat hier die Form eines hohlen Kegelstumpfs. Der Spannkonus 81 hat einen ersten Kolbenabschnitt 82, der zumindest teilweise durch eine Grundfläche 88 des Spannkonus 81 gebildet ist. Der erste Kolbenabschnitt 82 wird zusätzlich durch Anbauten im Bereich des Konusbodens gebildet, die z.B. Dichtelemente 82' bereitstellen, und durch ein kreisringförmiges Element 84', das der Hohlwelle 89 außen abgedichtet und gleitend aufliegt. Der erste Kolbenabschnitt 82 ist an einer ersten Seite S1 des Spannkonus 81 ausgebildet, die einer zweiten Seite S2 des Spannkonus 81 bezogen auf die Längsrichtung LR' gegenüberliegt. Der erste Kolbenabschnitt 82 bildet zusammen mit einem umgebenden Gehäuse 86' eines Pneumatikantriebs 86 eine erste Druckkammer 83 des Pneumatikantriebs 86.

Die erste Druckkammer 83 kann mittels einer Leitung 100 mit Druckluft (durch Pfeile symbolisiert) beaufschlagt werden, wobei die Leitung 100 innerhalb einer Antriebswelle 4 geführt ist. Die Antriebswelle 4 ist, anders als hier gezeigt, mit Antriebsmitteln verbunden, um die Antriebswelle 4 und damit das Spannsystem 80 in Rotation zu versetzten. Die Leitung 100 in der Antriebswelle 4 ist, wie auch die übrigen Leitungen 100', 100", mittels einer Drehdurchführung 101 mit einer nicht gezeigten Druckluftversorgung verbunden. Durch Befüllen der ersten Druckkammer 83 mit Druckluft wird der Spannkonus 81 linear in einer ersten Richtung R' nach hier rechts bewegt und dadurch ausgefahren. In Folge der Bewegung des Spannkonus 81 relativ zur Hohlwelle 89 gleiten die Spannkeile 93 den Spannkonus 81 hinauf, so dass die Spannkämme 92 weiter von der Hohlwelle 89 beabstandet werden. Mit anderen Worten werden die mehreren Trommelsegmente 91 gleichzeitig und gleichermaßen ausgefahren. Dadurch kann ein Reifen (nicht gezeigt), der auf einer Auflagefläche 94 einer Trommel 90 aufgenommen ist, aufgespannt werden. Der aufgespannte Reifen kann mittels einer Leitung 100", die in Figur 1 zum Teil nur symbolisiert ist, mit Druckluft gefüllt werden. Die Spannkämme 92 haben hier beidseitig austauschbare Bordscheiben 92', welche die Auflagefläche 94 seitlich begrenzen.

In Figur 1 ist gezeigt, dass die Hohlwelle 89 zumindest teilweise in einem Hohlraum 81' innerhalb des Spannkonus 81 angeordnet ist. In diesem Hohlraum 81' ist eine zweite Druckkammer 85 des Pneumatikantriebs 86 gebildet, wie anhand von Figur 2 beschrieben wird. Die zweite Druckkammer 85 ist durch einen zweiten Kolbenabschnitt 84 des Spannkonus 81 und das umgebende Gehäuse des Spannkonus 81, das den Hohlraum 81' bildet, sowie die im Spannkonus 81 befindliche Hohlwelle 89 gebildet. Die zweite Druckkammer 85 ist gegenüberliegend, bezogen auf die Längsrichtung LR', von einem Dichtelement 84" begrenzt, das unbeweglich gegenüber der Hohlwelle 89 ist. Es ist erkennbar, dass die zweite Druckkammer 85 nur innerhalb des Spannkonus 81 ausgebildet ist. Der zweite Kolbenabschnitt 84 ist hier durch ein kreisringförmiges Element 84' gebildet, das den Bereich zwischen Spannkonus 81 und Hohlwelle 89 ausfüllt. Das kreisringförmiges Element 84' ist gleitend und abgedichtet auf der Hohlwelle 89 gelagert und ist hier mit dem Spannkonus 81 verschraubt. Das kreisringförmige Element 84' bildet mit der einen Seite den zweiten Kolbenabschnitt 84, wobei die gegenüberliegende Seite Teil des ersten Kolbenabschnitts 82 ist.

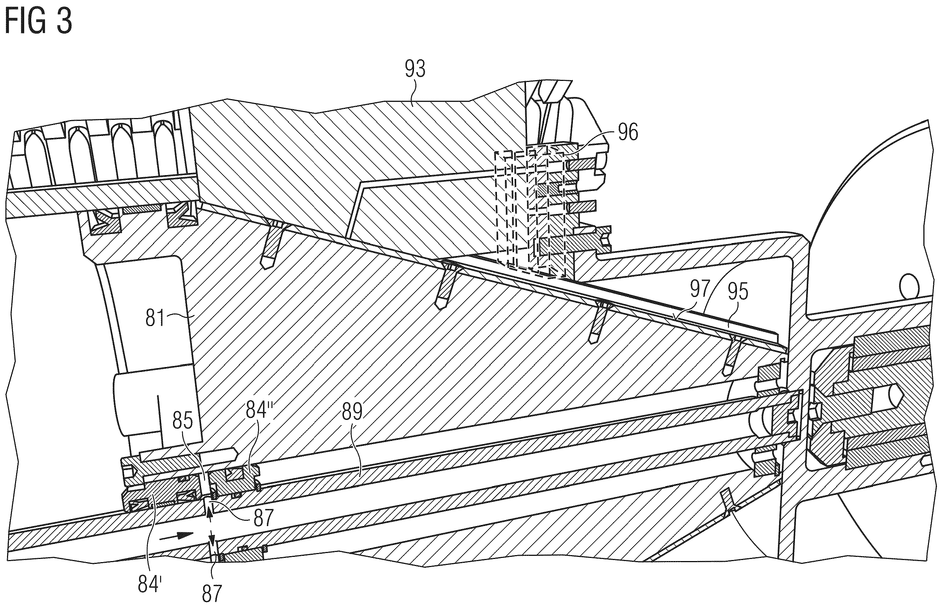

Der zweite Kolbenabschnitt 84 kann mit Druckluft beaufschlagt werden, die über die Hohlwelle 89 und eine Leitung 100' in die zweite Druckkammer 85 einströmt. Die Druckluft kann mittels Öffnungen 87 in der Hohlwelle 89 (Figur 3) in die zweite Druckkammer 85 eintreten. Dadurch wird der Spannkonus 81 in einer zweiten Richtung R" in Figur 2 nach links bewegt, d.h. der Spannkonus 81 wird eingefahren. Das hat zur Folge, dass die Spannkeile 93 den Spannkonus 81 wieder hinabgleiten und die Trommelsegmente 91 eingefahren werden. Dadurch kann ein Reifen von der Trommel 90 gelöst werden. Durch das Einfahren kann der Spannkonus 81 in eine Ruheposition bewegt werden (Figur 2).

In Figur 3 sind Führungsmittel für die Spannkeile 93 während einer Bewegung des Spannkonus 81 gezeigt. Der Spannkonus 81 hat hier Führungsmittel 95, um den Spannkeil 93 längs des Spannkonus 81 zu führen. In diesem Beispiel ist zu beiden Seiten des Spannkeils 93 ein flaches Führungselement, z.B. ein Flacheisen, angeordnet (hier nur eins sichtbar), so dass der Spannkeil 93 auf einer Gleitfläche 97 des Spannkonus 81 geführt wird. Zusätzlich sind Führungsmittel 96 für eine Stabilisierung des Spannkeils 93 in radialer Richtung vorgesehen. In Figur 3 ist angedeutet, dass der Spannkeil 93 bei einer Bewegung in radialer Richtung, d.h. quer zur Längserstreckung der Hohlwelle 89, mittels der Führungsmittel 96 geführt ist. Das jeweilige Führungsmittel 96 kann eine Schwalbenschwanzführung umfassen. Entsprechende Führungsmittel 95, 96 können für alle Spannkeile 93 des Spannsystems vorgesehen sein.

In Figur 1 ist gezeigt, dass das Spannsystem 80 Befestigungsmittel aufweist, um auch eine Felge mit Reifen an der Antriebswelle 4 des Spannsystems 80 drehbar anzuordnen. In diesem Beispiel sind als Befestigungsmittel für eine Felge ein Anschlagteller 78, ein Spannstern 17 und eine Reifenschnellspannmutter 76, z.B. eine Spindelmutter, vorgesehen. Die Befestigungsmittel 17, 76, 78 für eine Felge sind vorzugsweise endseitig an der Antriebwelle 4 angeordnet, wie in Figur 1 gezeigt. Vorteilhafterweise ist die Trommel 90 so konstruiert, bzw. kann so weit verkleinert werden durch den Pneumatikantrieb 86, dass die Trommel 90 in eine Felge eintauchen kann, um die Felge an der Antriebswelle 4 zu montieren.

Es wird abschließend noch einmal darauf hingewiesen, dass es sich bei den vorhergehend detailliert beschriebenen Spannsystemen lediglich um Ausführungsbeispiele handelt, welche vom Fachmann in verschiedenster Weise modifiziert werden können, ohne den Bereich der Erfindung zu verlassen. Weiterhin schließt die Verwendung der unbestimmten Artikel "ein" bzw. "eine" nicht aus, dass die betreffenden Merkmale auch mehrfach vorhanden sein können.

### Bezugszeichenliste

4 Antriebswelle
17 Spannstern
76 Reifenschnellspannmutter
78 Anschlagteller
80 Spannsystem
81 Spannkonus
81' Hohlraum
82 erster Kolbenabschnitt
82' Dichtelement
83 erste Druckkammer
84 zweiter Kolbenabschnitt
84' kreisringförmiges Element
84" Dichtelement
85 zweite Druckkammer
86 Pneumatikantrieb
86' Gehäuse
87 Öffnung
88 Grundfläche
89 Hohlwelle
90 Trommel
91 Trommelsegment
92 Spannkamm
92' Bordscheibe
93 Spannkeil
94 Auflagefläche
95 Führungsmittel
96 Führungsmittel
97 Gleitfläche
100, 100', 100" Leitung
101 Drehdurchführung
LR'
R', R"
S1, S2 Seite Spannkonus

## Patentansprüche

1. Spannsystem (80) für ein Reifenelement, insbesondere für einen Reifen, mit einer Trommel (90) mit mehreren Trommelsegmenten (91) zur Aufnahme des Reifenelements und einem Spannkonus (81), auf dem die Trommelsegmente (91) bewegbar gelagert sind, wobei das Spannsystem (80) einen Pneumatikantrieb (86) umfasst, um den Spannkonus (81) in seiner Längsrichtung (LR') zu bewegen, wobei der Spannkonus (81) einen ersten Kolbenabschnitt (82) für eine Bewegung des Spannkonus (81) in eine erste Richtung (R') und einen zweiten Kolbenabschnitt (84) für eine Bewegung des Spannkonus (81) in eine entgegengesetzte, zweite Richtung (R") aufweist,
und wobei der erste Kolbenabschnitt (82) und der zweite Kolbenabschnitt (84) an derselben Seite (S1) des Spannkonus (81) angeordnet sind.

2. Spannsystem nach Anspruch 1, wobei der erste Kolbenabschnitt (82) und der zweite Kolbenabschnitt (84) Bestandteil des bewegbaren Spannkonus (81) sind.

3. Spannsystem nach einem der vorstehenden Ansprüche, wobei der erste Kolbenabschnitt (82) durch eine Grundfläche (88) des Spannkonus (81) gebildet ist.

4. Spannsystem nach einem der vorstehenden Ansprüche, wobei der zweite Kolbenabschnitt (84) durch den ersten Kolbenabschnitt (82) gebildet ist.

5. Spannsystem nach einem der vorstehenden Ansprüche, wobei der Pneumatikantrieb (86) eine erste Druckkammer (83) aufweist, die durch den ersten Kolbenabschnitt (82) begrenzt ist, welche erste Druckkammer (83) außerhalb des Spannkonus (81) ausgebildet ist.

6. Spannsystem nach einem der vorstehenden Ansprüche, wobei der Pneumatikantrieb (86) eine zweite Druckkammer (85) aufweist, die durch den zweiten Kolbenabschnitt (84) begrenzt ist, welche zweite Druckkammer (85) innerhalb des Spannkonus (81) ausgebildet ist.

7. Spannsystem nach einem der vorstehenden Ansprüche, wobei der erste Kolbenabschnitt (82) und der zweite Kolbenabschnitt (84) bewegbar auf einer Hohlwelle (89) des Spannsystems (80) gelagert sind, die den Spannkonus (81) führt,
und/oder wobei eine Hohlwelle (89), die den Spannkonus (81) führt, innerhalb des Spannkonus (81) von einem Hohlraum (81') umgeben ist, wobei in dem Hohlraum (81') eine zweite Druckkammer (85) des Pneumatikantriebs (86) gebildet ist, wobei vorzugsweise die zweite Druckkammer (85) mittels der Hohlwelle (89) mit Druckluft beaufschlagt werden kann.

8. Spannsystem nach einem der vorstehenden Ansprüche, wobei ein Hohlraum (81') in einem Innern des Spannkonus (80), der die zweite Druckkammer (85) bildet, eine langgestreckte Form hat und parallel zur Längsrichtung (LR') des Spannkonus (80) verläuft,
und/oder wobei ein Durchmesser des Hohlraums (81') im Innern des Spannkonus (80) in radialer Richtung höchstens 40%, vorzugsweise höchstens 30%, bevorzugt höchstens 20%, eines Durchmessers einer Grundfläche (88) des Spannkonus (80) ist.

9. Spannsystem nach einem der vorstehenden Ansprüche, wobei der zweite Kolbenabschnitt (84) in radialer Richtung vollständig innerhalb des ersten Kolbenabschnitts (82) angeordnet ist.

10. Spannsystem nach einem der vorstehenden Ansprüche, wobei die Trommel (90) größenverstellbar ausgebildet ist, so dass Reifen mit unterschiedlichem Durchmesser aufgespannt werden können.

11. Spannsystem nach einem der vorstehenden Ansprüche, wobei die Trommel (90) größenverstellbar ausgebildet ist, vorzugsweise mittels wechselbarer Bordscheiben (92'), so dass Reifen mit unterschiedlicher Breite aufgespannt werden können.

12. Spannsystem nach einem der vorstehenden Ansprüche, wobei das Spannsystem (80) dazu ausgebildet ist, um mittels der Trommel (90) einen felgenlosen Reifen an einer Antriebswelle (4) des Spannsystems (80) anzuordnen und Befestigungsmittel (17, 76, 78) für eine Felge hat.

13. Verfahren zum Aufspannen eines Reifenelements auf eine Trommel (90) eines Spannsystems (80) gemäß einem der vorstehenden Ansprüche, wobei in dem Verfahren zumindest einmalig ein erster Kolbenabschnitt (82) des Spannkonus (81) mit Druckluft beaufschlagt wird, um den Spannkonus (81) in eine erste Richtung (R') zu bewegen zum Aufspannen des Reifenelements auf die Trommel (90).

14. Reifenbearbeitungsgerät mit einer Reifenbearbeitungseinheit, insbesondere einer Reifenschneidemaschine, und mit einem Spannsystem (80) gemäß einem der Ansprüche 1 bis 12.
